(19) Europäisches Patentamt / European Patent Office / Office européen des brevets

(11) **EP 3 748 339 B1**

(12) **EUROPEAN PATENT SPECIFICATION**

(45) Date of publication and mention
of the grant of the patent:
**21.02.2024 Bulletin 2024/08**

(51) International Patent Classification (IPC):
**G01N 21/65** *(2006.01)* **G01N 21/03** *(2006.01)*
**G01J 3/44** *(2006.01)* **G01J 3/02** *(2006.01)*
**G01J 3/18** *(2006.01)* **G01J 3/28** *(2006.01)*
**G01J 5/80** *(2022.01)*

(21) Application number: **20175034.6**

(22) Date of filing: **15.05.2020**

(52) Cooperative Patent Classification (CPC):
**G01N 21/65; G01J 3/0208; G01J 3/18;**
**G01J 3/2823; G01J 3/44; G01J 5/806;**
**G01N 21/0303;** G01N 2021/0392; G01N 2021/651;
G01N 2201/0642

(54) **DEVICE FOR GAS ANALYSIS USING RAMAN SPECTROSCOPY**

VORRICHTUNG ZUR GASANALYSE MITTELS RAMAN-SPEKTROSKOPIE

DISPOSITIF D'ANALYSE DE GAZ À L'AIDE DE LA SPECTROSCOPIE RAMAN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2019 IT 201900006954**

(43) Date of publication of application:
**09.12.2020 Bulletin 2020/50**

(73) Proprietor: **Pietro Fiorentini S.p.A.
36057 Arcugnano (VI) (IT)**

(72) Inventors:
- **Tondello, Giuseppe
  35141 PADOVA (IT)**
- **Cocola, Lorenzo
  30174 VENEZIA (IT)**
- **Poletto, Luca
  35136 PADOVA (IT)**

(74) Representative: **Braidotti, Andrea
Praxi Intellectual Property S.p.A.
Via F. Baracca, 5/A
30173 Venezia (IT)**

(56) References cited:
RU-C1- 2 613 200     RU-C1- 2 672 187
US-A- 4 676 639     US-A- 5 455 673

US-A- 5 786 893     US-A- 6 072 577
US-A- 6 100 975     US-A- 6 141 095
US-A1- 2002 126 289     US-A1- 2003 120 137
US-A1- 2004 042 006     US-A1- 2004 160 601
US-A1- 2015 090 900     US-A1- 2018 246 031

- HASSEL E P ET AL: "LASER DIAGNOSTICS FOR STUDIES OF TURBULENT COMBUSTION", MEASUREMENT SCIENCE AND TECHNOLOGY, IOP, BRISTOL, GB, vol. 11, no. 2, 1 February 2000 (2000-02-01), pages R37-R57, XP000959621, ISSN: 0957-0233, DOI: 10.1088/0957-0233/11/2/201
- T. Dreier ET AL: "Determination of temperature and concentration of molecular nitrogen, oxygen and methane with coherent anti-stokes raman scattering", APPLIED PHYSICS B. PHOTOPHYSICS AND LASER CHEMISTRY, vol. 45, no. 3, 1 March 1988 (1988-03-01), pages 183-190, XP055658222, DE ISSN: 0721-7269, DOI: 10.1007/BF00695289
- WOODMANSEE M A ET AL: "DEVELOPMENT OF HIGH-RESOLUTION N2 COHERENT ANTI-STOKES RAMAN SCATTERING FOR MEASURING PRESSURE, TEMPERATURE, AND DENSITY IN HIGH-SPEED GAS FLOWS", APPLIED OPTICS, OPTICAL SOCIETY OF AMERICA, WASHINGTON, DC, US, vol. 39, no. 33, 20 November 2000 (2000-11-20), pages 6243-6256, XP000980954, ISSN: 0003-6935, DOI: 10.1364/AO.39.006243

EP 3 748 339 B1

**Description**

The present invention relates to a device for analyzing the composition of a gas. In particular, the present invention relates to an optical type device for the molecular analysis of gas.

As is known, the analysis of a gas mixture (hereinafter also referred to as gas), i.e. the determination of its composition, the quantification of the percentages of the individual gases making up the mixture (hereinafter also referred to as the component), or the determination of a single trace component in the mixture can be carried out with different methodologies and instrumentation.

For example, invasive technologies are known in which the gas is placed in contact with a suitable sensor, or made to flow in a suitable duct.

Electrochemical sensors that exploit appropriate reactions between the gas being measured and another compound stored in an electrode belong to a first category, freeing charges that produce current that can be measured. They are very popular sensors, of very small size and low cost with also high sensitivity. However, electrochemical sensors do not have a long life and are in many cases easily saturated. In addition, electrochemical sensors measure only a specific single gas.

Gas chromatographs belong to a second category, in which the gas to be analyzed is made to flow through the help of a conducting gas (carrier) in a long column (capillary) in order to separate the various components of the gas being measured, which eventually leave the column separately and can be detected and/or measured.

Although it is a precise and sensitive tool, it is not without drawbacks.

First of all, it is a complex instrument that requires a continuous flow of carrier gas and, for the analysis of different types of gas composition, requires different measurement columns. It also requires careful calibration.

For these reasons, the gas chromatograph is suitable for laboratory use, while it is not very suitable for an industrial environment and/or for serving in-line processes.

A different technology consists of optical instruments which by their nature are eminently non-invasive: a beam of light interacts with the gas and the effect produced in this interaction is measured.

A first category of optical instruments is constituted by instruments which measure the absorption of a light beam when crossing a path in the gas to be measured.

The absorption produced is regulated by the well-known Lambert-Beer law:

$$I(\lambda) = I_0(\lambda)\, exp[-k(\lambda)l]$$

where:

-    $I(\lambda)$ is the intensity of the beam after passing through the thickness l of the gas;
-    $I_0(\lambda)$ is the intensity of the input beam as a function of the wavelength $\lambda$;
-    k is the absorption coefficient, which for a gas is expressed with $k(\lambda) = N \cdot \sigma(\lambda)$ with N = number of molecules per unit of volume (density of the sample: e.g. molecules/cm$^3$) and $\sigma(\lambda)$ the absorption section (cross-section) relating to the gas(es) present.

The absorption section $\sigma(\lambda)$ is a characteristic of the single gas and is linked to the energy transitions of its molecules. This is a generally known and tabulated quantity, for example available on various databases.

From the formula it can be seen that by measuring I ($\lambda$) and I0 ($\lambda$), that is, the spectrum of the incident and transmitted radiation, it is possible to determine N if l is known.

In general, a radiation lamp is used for the radiation beam, for example an incandescent lamp which produces a continuous spectrum which includes all the wavelengths $\lambda$.

On the other hand, "N" is proportional to the partial pressure or the percentage of each gas. It is therefore a multigas analysis method capable of determining with a single measurement the percentages of all the gases present.

For most gases the absorption transitions are located in the infrared (IR), i.e. in the region with $\lambda$ between 1 and 20 $\mu$m. They correspond to energy transitions between different vibrational and rotational states of the molecules.

This technology is also not without drawbacks. For example, in these spectral regions the efficiency of the detectors is much lower than in the visible/near IR with $\lambda$ between 0.4 and 1 $\mu$m. They are also expensive and often require cooling to keep their dark current at a low level. Even the optical materials used, for example for the windows of the absorption cell and/or for coupling lenses, are made of special materials such as ZnSe or Si being the common opaque glass for $\lambda > 2$ $\mu$m. For these reasons, this technology does not allow the use of absorption spectroscopy for the analysis of the gases contained, for example, in a closed container even if that is transparent, such as a bottle or a vial.

For the analysis, with optical type technology, of matter in general, it is known to exploit the Raman effect.

Basically, the Raman effect implies that if a material (solid, liquid or gaseous) is shined by a monochromatic radiation (i.e. ideally with a single $\lambda$ or in practice with a very narrow band $\delta\lambda$), in practice today realized with a lasers, alongside the radiation diffused at the same wavelength $\lambda$ as the incident radiation (Rayleigh scattering), components with different $\lambda$ are present, albeit with very low intensity, generally greater than that of the incident radiation.

The Raman component at different $\lambda$ contains

information on the molecules that compose the substance, and therefore is suitable for their identification. In fact, it is verified that the difference in wavelengths $\Delta\lambda$ between the Raman component and the incident radiation is exactly equal in energy terms to the differences between the vibrational and rotational levels of the various molecules. The intensity of the diffuse Raman signal IR ($\lambda$) is given by the formula:

$$I_R(\lambda) = K \cdot I_L \cdot N \cdot \sigma_R(\lambda)$$

where:

- K is a proportionality constant that mainly depends on the efficiency of the optical system of collection,
- $I_L$ is the intensity of the incident laser radiation,
- N is the density of the sample molecules (molecules/cm$^3$), and
- $\sigma_R$ ($\lambda$) is the Raman scattering section (Raman cross-section) relating to the various transitions of the different molecules of the sample.

The Raman effect therefore allows to measure the molecular spectrum at any wavelength $\lambda$ defined by the exciting radiation, and not exclusively in the infrared as in the absorption spectroscopy.

The wavelength $\lambda$ of the exciting radiation can be chosen in order to use existing lasers and/or detectors or to minimize spurious/disturbing effects that occur in particular when operating in solids/liquids such as fluorescence; or to maximize the transparency of the walls in the case of analysis inside containers.

However, the intensity of the Raman signal is very weak being $\sigma_R(\lambda)$ very small and for example much lower than $\sigma(\lambda)$. The weakness of the Raman signal means that in the instrumentation used, great care is taken in breaking down other components of the scattered light, such as Rayleigh radiation which, as mentioned, is the part of light diffused at the same wavelength $\lambda$ as the exciting radiation and that it is much more intense than the Raman component.

It should also be noted that $\sigma_R(\lambda)$ and therefore the intensity of the Raman signal varies as $\lambda^{-4}$ with respect to the wavelength $\lambda$ of the exciting radiation.

It is therefore convenient from this point of view to operate with an exciting laser-like radiation in the green-blue.

Another important property of the Raman effect is that it is also present for homonuclear diatomic molecules: $H_2$, $O_2$, $N_2$, $Cl_2$ etc., which instead have no appreciable absorption transitions and therefore are not detectable with this technique.

From the formula illustrated above, it is also seen that the intensity of the Raman signal is proportional to the density N of molecules present (molecules/cm$^3$). Hence, since in ambient pressure gases, N is about a thousand times smaller than in a liquid or solid, the Raman signal will therefore be a thousand times lower. For this reason, the Raman technique as an analytical method has developed almost exclusively for the analysis of solids and liquids, and much less for gases.

To overcome this limitation, various solutions aimed at increasing the intensity of the exciting radiation $I_L$ are listed in the scientific literature.

A first solution adopted is that of passing the laser beam several times in the measurement area. For this purpose, suitable spherical mirrors are used which reflect and refocus the laser several times in the same area creating an optical pseudo-cavity. It is a relatively simple solution which has the drawback of a high sensitivity of the device to the alignment of the mirrors and which is not suitable for industrial applications.

A second solution adopted consists in coupling a laser to an optical cavity so that the wavelength $\lambda_L$ emitted by the laser coincides perfectly with one of the cavity modes. If this condition is fulfilled, and the cavity is made up of two mirrors with high reflectivity, it is shown that an accumulation of power occurs in the cavity. Basically, the cavity acts as a reservoir for radiation, increasing its intensity.

If now the gas being measured is found in the cavity, there is a strong amplification of the Raman signal. To achieve the coupling condition, $\lambda L$ must be equal to an equal multiple of the cavity length d: $\lambda_L$ = 2nd.

Since $\lambda_L$ is of the order of 0.5 $\mu$m and of the order of several cm, n results in an integer of about 200000; the laser-cavity coupling requires a very fine control of the $\lambda_L$ and/or length d of the cavity; this control is often done with one of the mirrors in the cavity mounted on a piezoelectric movement.

However, a further complication is given by the fact that, due to the high reflectivity of the mirrors, there is a strong component of radiation reflected towards the laser itself. This radiation disturbs the functioning of the laser and must be blocked. For this an electro-optical isolator is used.

For all these reasons it is a complex configuration that is not suitable for use in industrial and/or in-line environments.

Another known device comprises a lens for focusing the laser radiation at the entrance of a hollow fiber so that the laser radiation propagates inside it. If the gas being measured is also contained in the fiber, a considerable increase in intensity and therefore in the Raman signal occurs.

Also in this case, however, drawbacks are present. For example, the hollow fiber, unlike the optical fibers widely used for the propagation of optical signals with very low losses even for very long distances, has strong losses because a true confinement of the electromagnetic field of optical radiation is not realized inside. Lengths of about 1 m can be used.

Furthermore, further drawbacks of this system are: the difficulty of filling/emptying the gas from the fiber due to the small diameter of the fiber itself (tens of seconds are required) and the presence of a strong component of fluorescence light produced by the glass of the walls of the fiber illuminated by laser light.

US6072577 describes a traditional system for analyzing gases by means of an apparatus for acquiring Raman spectra. In particular, the gas flow is sent to a sampling cell; the incident light beam coming from a laser source is diffused inside the sampling cell and the diffused light is received by the spectrograph associated with a processing unit.

US6100975 shows an apparatus for the backscattering acquisition of Raman spectra. In particular, this apparatus provides for the use of optical fibers to transport the laser signal from the source to the analysis cell. Furthermore, in the apparatus of US6100975 a transparent optical barrier 30 is provided which allows the coupling of the bundle of optical fibers with the analysis chamber 20. This solution is however not fully satisfactory since the use of the optical fibers makes the apparatus rather expensive and complex to build. Furthermore, being particularly fragile, the optical fibers can easily break, therefore requiring a lot of care in being handled.

US5786893 describes a system for the analysis of gases by means of an instrument for the acquisition of Raman spectra with multipass technology, that is, by using a pair of mirrors which allow the laser beam to be reflected several times in an area of the sample. Said mirrors are contained inside the cell in which the gas to be analyzed is made to flow. This solution is not fully satisfactory since inserting, correctly positioning and maintaining the alignment of the mirrors inside the analysis chamber is particularly complicated, thus requiring the realization of an analysis chamber of greater dimensions and higher costs.

RU2613200 describes an apparatus for measuring Raman spectra which includes a focusing optic which is completely external and separate from the gas analysis cell. This solution is not fully satisfactory since the positioning of the focusing optics outside the analysis chamber requires to create/prepare a window for the passage of the input laser beam at a wall of the chamber; in particular, this window defines a further interface to be crossed for the laser beam, with diffusion and refraction problems which thus cause optical aberrations.

RU2672187 discloses a Raman gas analyzer comprising a laser, a focusing lens that focuses the beam inside a cell where the gas to be analyzed is made to flow via an inlet and an outlet duct. Before entering the cell, the "primary" beam passes through a prism to be reoriented. Moreover, a couple of mirrors are provided outside of the cell to allow multiple passages of a "secondary" beam through the cell. The Raman radiation is collected through a window in a direction that is angled less than 90° with respect to the direction of the incident beams and sent to a detector. The object of the invention is to propose an optical device for the analysis of the gas composition which overcomes, at least in part, the drawbacks of the traditional solutions.

Another object of the invention is to propose a device which can be obtained simply, quickly and with low production costs.

Another object of the invention is to propose a device whose use is easy and inexpensive.

Another object of the invention is to propose a robust and small-sized device.

Another object of the invention is to propose a device which is suitable for industrial application.

Another object of the invention is to propose a device that can be used for making measurements in the field and, in particular, outside a laboratory.

Another object of the invention is to propose a device with an overall alternative and/or improved characterization, both in construction and functional terms, with respect to the traditional ones.

Another object of the invention is to propose a device that can be produced and used on a large scale for the analysis of the composition of the gas.

Another object of the invention is to propose a method for optimizing the representation of the Raman spectrum contained in a digital image.

Another object of the invention is to propose a method for obtaining a more realistic and truthful Raman spectrum.

Another object of the invention is to propose a method which allows to compensate for the aberrations of the device or optical system used to acquire a Raman spectrum.

All these purposes, both individually and in any combination thereof, as well as other purposes which will result from the following description, are achieved, according to the invention, with a device with the characteristics indicated in claim 1.

Another object not according to the invention is a method to optimize/improve the representation of the Raman spectrum contained in a digital image.

Another object not according to the invention is a method for obtaining a more realistic and truthful Raman spectrum.

Another object not according to the invention is a method which allows to compensate for the aberrations of the device or optical system used to acquire a Raman spectrum.

All these objects, both individually and in any combination thereof, as well as other purposes which will emerge from the following description.

The present invention is further clarified in some of its preferred forms of practical embodiment, given purely by way of non-limiting example with reference to the attached drawings, in which:

| Figure 1 | represents in schematic of a device according to the present invention, |
|---|---|
| Figure 2a - 2c | represent in schematic form three successive steps of the method. |

Figure 3    shows in schematic form the device according to the invention in a different embodiment,

Figure 4    shows an example of an image as detected by the detector,

Figure 5    shows the image of fig. 4 after the straightening/horizontal translation phase,

Figure 6    shows an example of an image in which the spectral bands are represented on a logarithmic scale,

Figure 7a    shows an example of the radiation emitted by the laser source,

Figure 7b    shows an example of a Raman spectrum before deconvolution, and

Figure 7c    shows the same Raman spectrum of fig. 7b after deconvolution.

Suitably, the elements or parts of elements in common between the embodiments described below will be indicated with the same numerical references.

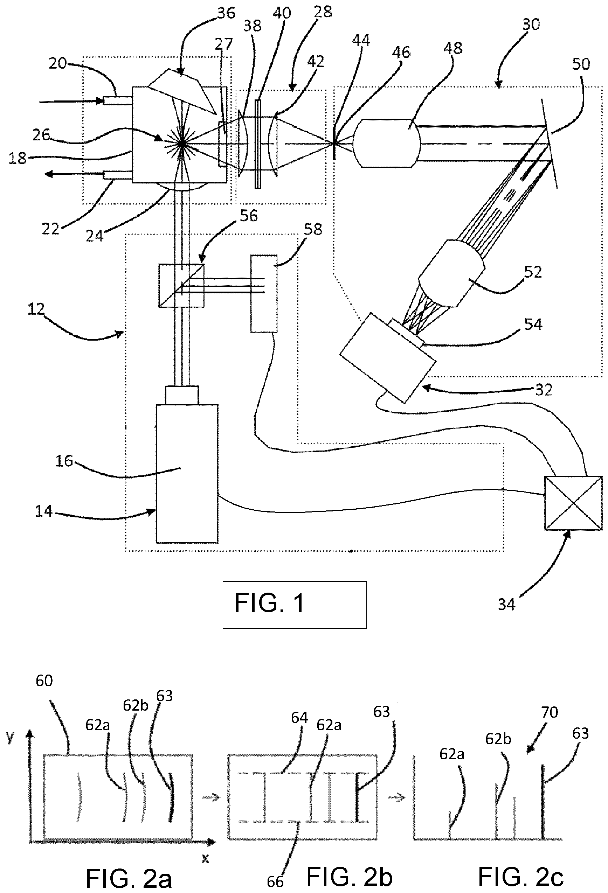

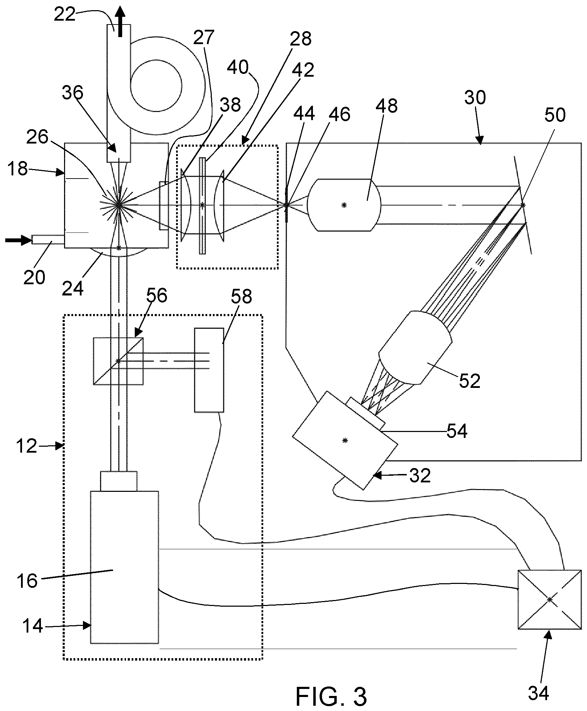

In figures 1 and 3, reference 12 indicates a device, according to the present invention, of the optical type, for the acquisition of at least one Raman spectrum for the analysis of the gas composition.

The device 12 for analyzing the gas composition comprises:

- an exciting radiation emitter 14 comprising a multimode laser source 16 configured to emit a laser beam;

- an analysis cell 18 suitable for containing a gas and comprising an inlet opening/duct 20 through which a gas can flow into the analysis cell 18, and an outlet opening/duct 22 through which the gas can flow from the analysis cell 18

- an imaging group 28 of the Raman source and a spectrograph 30,

- a detector 32 suitable for collecting the image of the spectrum formed by spectrograph 30

Cell 18 further comprises a focusing lens 24, suitable for focusing the laser beam, emitted by said source 16, into a focal area 26 inside the analysis cell 18. The focal area 26 acts as a source for Raman radiation which is collected in a direction perpendicular to the direction of the laser beam entering the analysis cell 18.

Conveniently, the analysis cell 18 further comprises a window 27 suitable for being crossed by Raman radiation.

Suitably, the cell 18 is watertight and is connected to the outside exclusively at/by means of said opening/inlet duct 20 and said opening/outlet duct 22.

The gas seal at the laser beam inlet within the analysis cell 18 it is obtained by means of said focusing lens 24.

Suitably, the gas seal at the exit of the Raman radiation from the analysis cell 18 is obtained by the window 27, which is preferably the only window present in cell 18.

The imaging group 28 is suitable for forming an image of the Raman source at the input to the spectrograph 30.

The device 12 for analyzing the gas composition can further comprise and/or be connected to a control and/or processing unit 34, suitably programmable. Preferably, said control and/or processing unit 34 is configured to apply a constrained deconvolution algorithm for improving the spectral resolution.

According to a possible embodiment, the multimode laser source 16 can be a solid state laser or a diode laser.

In general, for using Raman in gas it is convenient to use green-blue lasers. In prior art Raman systems, the laser used is a single longitudinal mode. As known from the theory, a multimode laser can work on different ways of the cavity that contains it. The modes are distinguished in longitudinal ways, characterized by their direction coinciding with the optical axis of the cavity and in transversal ways that emit in directions slightly different from the optical axis.

Each mode is also characterized by its well-defined frequency v (or wavelength $\lambda$ = c/v with c = speed of light); in particular the longitudinal modes have frequency v = nc/2d with n integer (in general very large) and d = length of the cavity. A laser operating in the single longitudinal mode creates a highly monochromatic source, ideal for the Raman effect. In fact, the various Raman components emitted are characterized by a precise difference $\Delta\lambda$ compared to the $\lambda_L$ of the exciting radiation; if the latter in turn has a bandwidth $\delta\lambda_L$ also the Raman components will have the same bandwidth in addition to their intrinsic width (in general very small).

A single-mode laser has a $\delta\lambda_L$ bandwidth of about 0.01 nm or less. To obtain the single longitudinal mode operation from a laser, particular arrangements for selecting the modes are required which entail a considerable manufacturing complexity and above all a considerable reduction in the emitted intensity; in addition, a single-mode laser requires accurate temperature control achieved through the use of Peltier devices.

A multimode laser, on the other hand, has a higher bandwidth: it can be worth 0.1 nm for solid state lasers, such as the 532 nm green laser obtained by doubling the frequency of the Nd-YAG laser at 1064 nm, but it can also reach 1- 2 nm for diode lasers operating in violet/blue.

Advantageously, these types of lasers are widely used today: the green laser is used in many projections, while the diode laser is a component of optical and lighting projectors. Both are produced in large/very large series, robust and low cost.

The use of multimode lasers for the Raman device is therefore very advantageous being able to operate with high powers and therefore great intensities.

Advantageously, a bandwidth of about 0.1 nm with green laser can be used, which is perfectly compatible with direct use for Raman in many applications. Conveniently, in fact, the overall spectral resolution of the whole device 12 is determined above all by the characteristics and dimensions of the spectrograph 30 used. Preferably, the overall spectral resolution of the device 12 can be between 0.2-0.5 nm. Appropriately, for the analysis of many commonly used gases this resolution is sufficient, for example for the analysis of combustible gases such as grid gas or biogas.

In these cases, the lines or bands of the various components: methane, ethane, carbon dioxide, nitrogen, water vapor are well separated and distinguishable with these resolutions.

Suitably, for the use of the violet/blue diode laser the bandwidth of 1-2 nm needs an appropriate correction.

Conveniently, an example of correction is shown in US patent application US20060176478, wherein said correction is achieved by the use of a diffraction grating placed downstream of the laser which acts as a spectral filter. However, this grating constitutes an additional optical element which complicates the optical configuration.

Advantageously, according to a possible embodiment of the present invention, the correction can be carried out with calculation methods, using spectral deconvolution techniques.

As is known, deconvolution is a mathematical procedure widely used in various sectors, for example to improve the resolution of images deteriorated by various aberrations.

The deconvolution procedure essentially consists in appropriately filtering the spectral components of a signal by reducing their low frequency and enhancing their high frequency. In general, deconvolution is an operation that tends to decrease the ratio between signal and noise. Suitably, however, this effect can be greatly reduced if the aberrant function is known with high precision, thus carrying out a constrained deconvolution. Advantageously, the aberrant function is represented by the bandwidth function of the laser used. Preferably, this function can be measured by the same spectrograph 30 used for the detection of the Raman components since it is contained in the Rayleigh component diffused by the gas which, as known, has exactly the same spectrum as the laser radiation.

Advantageously, according to a possible embodiment, the device 12 can comprise a beam separator 56 suitable for deflecting a portion of the laser beam leaving the multimode laser source 16, and for sending it to a meter 58 connected to the control and/or processing unit 34. Preferably, the beam separator 56 deflects a part - in particular a small portion - of the laser beam leaving the laser source 16 and sends it to the meter 58.

Conveniently, the meter 58 can be constituted for example by a photodiode and measures the intensity of the beam. The intensity emitted by a laser, especially if multimode, can present fluctuations due to various instabilities that originate in the laser cavity. Advantageously, by using the signal of the meter 58, the control and/or processing unit is configured to 34 compensate for these fluctuations and obtain a stable signal.

Advantageously, said procedure for compensating the fluctuations in the intensity of the laser beam emitted by the laser source 16 can be carried out substantially in real time.

Advantageously, said procedure for compensating the fluctuations in the intensity of the laser beam emitted by the laser source can be implemented so that the signal corresponding to an emission carried out at instant "t" by the emitter 14 of the source 16 and then detected by the detector 32 is compensated with the signal corresponding to an emission made at the same instant "t" by the same emitter 14 and detected by the meter 58.

For example, during said compensation procedure it is possible to divide the intensity value measured by the detector 32 by the value of intensity detected by the meter 58, and preferably that corresponding to the emission carried out by the same emitter 14 at the instant "t".

Advantageously, the focusing lens 24 can be made of special optical glass, for example Ultraviolet Fused Silica (UVFS), in order to reduce the fluorescence caused by the glass. Advantageously, the focusing lens 24 is covered on one or, preferably, on both surfaces with traditional anti-reflective layers (AR) in order to minimize reflectivity. Suitably, the anti-reflective layers can be made of materials and thicknesses defined in order to minimize reflectivity precisely at the wavelength of the radiation emitted by the laser and in this way the diffused light is advantageously minimized.

Preferably, the focusing lens 24 can be a convex lens.

Preferably, the focusing lens 24 can be installed directly on the external walls of the analysis cell 18. Preferably, during the analysis, one face of the focusing lens 24 is in contact with the gas to be analysed, while the other face is in contact with the external environment of said chamber.

Advantageously, no further optical elements are interposed between the focusing lens 24 and the laser emitter 14. Preferably, only a beam separator 56 can be interposed between the focusing lens 24 and the laser emitter 14, advantageously for the purpose described above.

Preferably, according to a possible embodiment, the focal area 26, in which the laser beam is focused by the focusing lens 24, can have an elongated hourglass shape. In this way, the interaction with the gas to be analysed inside the cell 18 is maximum, the intensity of the laser beam being maximum.

Conveniently, in the case of multimode lasers 16 the dimensions of the focal area 26 in terms of diameter D and length L are determined by the divergence $\alpha$

(radians) of the laser beam, by its diameter d and by the focal length f of the focusing lens 24.

Preferably, the diameter D of the focal area 26 is given by D = α · f while the length L is approximately proportional to f2/d. Preferably, the focusing lens 24 has a small focal length f, for example about 30-50 mm.

Conveniently, in the case of multimode solid state lasers 16 the typical divergence can be about 1-2 mrad so that with a 50 mm focal lens a focal area 26 and therefore a Raman source with D = 100 μm and L = 6 -7 mm is obtained.

Conveniently, for the diode lasers 16, on the other hand, the divergence α is very large and furthermore the beam emitted does not have circular symmetry but is elliptical and there are therefore two different divergences respectively in directions parallel or perpendicular to the junction of the diode. Advantageously, this asymmetry can be corrected with suitable lenses and make the beam circular; appropriately, in this case, the same considerations as above apply.

In the systems of the prior art, the cells used for Raman in gases use suitable windows to make the laser beam enter and exit the cell. However the passage of a laser beam through a material (for example glass) of a window inevitably generates an emission of fluorescence radiation which, undesirably, disturbs the weak Raman signal emitted. The known art has tried to remedy this problem; for example, in patent US4676639, in order to overcome this drawback, the cell is provided with suitable screens (baffles) which reduce the diffused light.

Suitably, according to a possible embodiment of the present invention, the cell 18 can be free of windows crossed by the laser beam.

Preferably, said cell 18 can have particularly compact dimensions. For example, said cell 18 can have a substantially cylindrical shape, and have a diameter of about 10-20 mm, and a length of about 30-100 mm. Advantageously, the cell 18 can be oriented with the major direction substantially parallel to the direction of the laser beam entering the cell itself.

The analysis cell 18 comprises a stopper 36 of the laser beam suitable for totally absorbing the laser beam without diffusing spurious radiation. In particular, the beam stopper 36 substantially completely absorbs the radiation of the laser which has passed through the focal area 26.

Advantageously, in a possible embodiment (see fig. 3), the beam stopper 36 consists of a tubular section. Preferably, said tubular section is made of copper since copper has a high absorption for green and blue radiation, in addition to having a high coefficient of thermal conductivity.

Considering that even a very small fraction of radiation can be diffused and go to disturb the weak Raman radiation, the traditional stoppers are either large or must be placed far from the cell precisely to minimize the contribution of the diffused light. Advantageously, in a possible embodiment of the present invention, in order to have a beam stopper 36 which is simple and compact (thus having a device 12 which is simple and compact), while still maintaining efficient absorption of diffused light and thermal exchange, the beam stopper 36 is defined by a tubular section, preferably of copper, shaped so as to present a substantially curved path, preferably substantially spiral or helical. In particular, in this way, the laser radiation is therefore effectively trapped and the heating produced by it is effectively disposed of by the entire external surface of the tubular section.

In particular, the beam stopper 36 of the device 12 according to the invention is therefore more advantageous than the traditional ones which, to minimize the contribution of the diffused light, have particularly large dimensions or that must be placed far from the cell, thus causing an undesired increase in the dimensions of the entire device.

Advantageously, said tubular section, preferably made of copper, which defines the beam stopper 36 can be welded to the external wall of the cell 18 in order to prevent the gas from escaping.

Advantageously, in a possible embodiment (see for example Figure 3), the tubular section which defines the beam stopper 36 also defines the gas outlet duct 22 from the analysis cell 18 and/or the inlet duct 20 of the gas to be analyzed inside the analysis cell 18.

Conveniently, the beam stopper 36 can be inserted/installed, at least in part or preferably completely, inside the analysis cell 18.

Preferably, according to a possible form of embodiment of the present invention, the analysis cell 18 can be completely free of optical windows traversed by the laser beam and the gas seal is only necessary at the entrance of the beam at only the focusing lens 24.

Conveniently, the analysis cell 18 it is devoid - inside - of screens or mirrors and, advantageously, there is a single window, i.e. window 27 which is suitable for being passed through by the Raman radiation exiting from said analysis cell 18.

Preferably, according to a possible embodiment of the present invention, the analysis cell 18 can be free of optical windows crossed by the laser beam emitted by the source 16 and the seal for the gas is realized at the inlet of said beam by the same focusing lens 24 and at the outlet of the beam directly by the beam stopper 36.

Conveniently, the focusing lens 24 is provided on a wall of the cell 18 which faces the one in which the beam stopper 36 is mounted.

Advantageously, the focusing lens 24 faces the laser source 16. Advantageously, the laser source 16, the focusing lens 24, and the focal area 26 can be aligned with each other, and preferably are also aligned with the beam stopper 36.

Conveniently, the window 27 is provided on a wall of the cell 18 which faces the group imaging group 28.

Advantageously, according to a possible embodiment, the imaging group 28 can comprise a collimation lens 38, a laser light filter 40, and a focusing lens 42.

Advantageously, the collimation lens 38 has its focus coinciding with the Raman source 26 and the focusing lens 42 is suitable for forming the image of the Raman source 26 on the input plane of the spectrograph 30.

Advantageously, according to a possible embodiment not shown, at least one part or the whole imaging group 28 is housed inside the cell 18. Advantageously, according to a possible embodiment not shown, instead of the window 27 of the cell 18 - as described above - a lens can be provided, preferably the collimation lens 38 of the imaging group 18 can be directly provided. Advantageously, in this case, the gas seal in correspondence the output of Raman radiation from the analysis cell 18 is obtained by means of a lens, preferably of a collimation lens 38.

Advantageously, an almost parallel beam comes out of the collimation lens 38, a better condition for the operation of the filter 40 which preferably can for example, be an edge type filter.

As known from the optical relations, the dimensions of the image are in relation to the dimensions of the Raman source 26 in the ratio f42/f38 in which f42 is the focal length of the focusing lens 42 of the imaging group 28 and f38 is the focal length of the collimation lens 38. Preferably, with an f42/f38 ratio lower than 1, there is a reduction and therefore the image of the Raman source 26 on the input plane of the spectrograph 30 can be suitably reduced, with a considerable advantage for the performance of the spectrograph 30 itself.

Advantageously, according to a possible embodiment, the spectrograph 30 can comprise an inlet plane 44 which contains an entrance slit 46, a first lens 48 which has its focus at the inlet plane 44, a diffraction grating 50, and a second lens 52 suitable for converging the diffracted rays coming from the diffraction grating 50 on an exit plane 54, on which the spectrum is thus formed.

Suitably, spectrograph 30 is the instrument used to separate the various spectral components present in the Raman image which forms on the plane 44 which contains the entrance slit 46.

Suitably, the main characteristics of a spectrograph 30 are:

- angular aperture input $\Omega$,
- dispersion D *, and
- resolution R.

Conveniently, the angular aperture of input $\Omega$ is linked to the brightness of the instrument, i.e. its ability to collect light: the larger the $\Omega$ the brighter and therefore more efficient the spectrograph 30.

Suitably, the spectrograph 30 has $\Omega$ as high as possible, preferably between 0.1 and 0.8 steradian and more advantageously between 0.3 and 0.8 steradian, and this is advantageous for Raman application in gases, where, due to the weak Raman signal, it is important to collect as much radiation as possible and then operate with a dispersing instrument with high angular collection power. Conveniently, the dispersion D* indicates how separate the different spectral components are on the exit plane 54 where the spectrum is formed.

Suitably, the resolution R indicates the ability to separate two spectral components separated by a small difference in wavelengths $\delta\lambda$. Suitably, the dispersing element is defined by the diffraction grating 50. Advantageously, according to a possible embodiment, the diffraction grating 50 can function in reflection and illuminated with parallel light.

Conveniently, for this purpose, the first lens 48 of the spectrograph 30 has its focus in the input plane 44 where the image is formed; the second lens 52 converges the rays diffracted by the diffraction grating 50 on the exit plane 54 on which the spectrum is formed.

Advantageously, the first lens 48 and the second lens 52 have a large aperture, for example with an "f" which is substantially between 2 and 1, so as to obtain a particularly large $\Omega$, in particular 0.3-0.8 steradian.

Advantageously, according to a possible embodiment, the first lens 48 and the second lens 52 can be photographic lenses. In particular, these lenses, so widespread in the market, are perfectly suitable for use as first and second lenses 48, 52: they are of high aperture, have perfect correction for aberrations and are inexpensive.

Advantageously, the focal distances f48 (i.e. focal distance of the first lens 48) and f52 (i.e. focal distance of the second lens 52) are different from each other. Advantageously, the focal distances can be f52 <f48 and preferably f52 = ½ f48. In this way the optical system formed by the first lens 48 and the second lens 52 forms on the spectral exit plane 54 an image of the input plane 44 and therefore also of the Raman image reduced by a factor 2.

This solution is advantageous compared to to the most used solution, that is with f52 = f48, in fact the dispersion D * linked to the dispersive power of the grating and the value of f52 decreases as a consequence but the resolution R remains the same.

Advantageously, the full spectrum of the Raman signal extends over a halved length, thus allowing to use a smaller detector 32 with savings in terms of cost and dissipated power.

Conveniently, the resolution R is instead linked to the resolving power of the grating 50 and to the width of the entrance slit 46. In fact, the optical system of the spectrograph 30 can be thought of as forming different images of the entrance slit 46 on the spectral exit plane 54, each corresponding to a different wavelength $\lambda$ (spectral lines or bands), reduced by the reduction (for example by half).

Advantageously, according to a possible embodiment, if the Raman image is sufficiently thin, for example as in the case illustrated, the spectrograph can be devoid of an entrance slit 46 (slitless mode). This has the great advantage of allowing the entire image of the Raman source 26 to enter the spectrograph 30 without any loss of luminous flux. Conveniently, in this case, the entrance slit 46 functions as a simple diaphragm.

Advantageously, according to a possible embodiment, the detector 32 can be placed on the spectral plane 54.

Conveniently, the detector 32 is a two-dimensional detector and, in particular, includes an image sensor and, in particular, provides an output a digital image 60, i.e. an array of pixels. For example, a typical image 60 is shown in Fig. 2a.

Advantageously, the pixel size of the detector 32 is small, preferably about 5-20 microns and, more preferably, about 5-10 microns, so as not to degrade the spectral resolution R.

Conveniently, the detector 32 can be a CCD eventually cooled.

Conveniently, the detector 32 can be an uncooled CMOS type sensor. This is particularly advantageous since CMOS sensors are widespread and used in many industrial and consumer applications, and are also very robust and have low cost.

Conveniently, the control and/or processing unit 34 is configured to provide the Raman spectrum complete with all its spectral components starting from the digital image 60 formed on the two-dimensional detector 32.

Advantageously, the whole device 12 can substantially be contained in an optical table. Conveniently, in a possible embodiment, the control and/or processing unit 34 can also be positioned remotely with respect to the Raman spectrum acquisition device.

Advantageously, in a possible embodiment, the control and/or processing unit 34 of the device 12 can be configured to compensate for the spatial aberrations created by the optics of the Raman spectrum acquisition device, preferably the Raman spectrum of a gas. Preferably, the control and/or processing unit 34 of the device 12, as described above, can be configured to implement a method as described below.

The advantages which can be achieved with a device and a process according to the present invention are therefore now evident.

In particular, a device has been made available which is much lower in cost than the devices of the prior art, and moreover robust and effective.

With the optimizations discussed, a device with a high sensitivity in the measurement has become available.

Furthermore, as the device is very simple, it can also be used for industrial applications.

Conveniently, the device 12 - as described above - configured to obtain a digital image 60 of the Raman spectrum, or in general any other Raman spectrum acquisition device which is configured to generate a digital image of the Raman spectrum as output, can be provided with a processing unit in which a software which implements a method for processing said image to obtain an optimized Raman spectrum is loaded and/or executed.

Preferably, said image processing method is configured to compensate for the spatial aberrations created by the optics of the Raman spectrum acquisition device, preferably of the Raman spectrum of a gas.

Suitably, the processing unit can be integrated in the image acquisition device comprising the Raman spectrum, preferably of a gas, and/or it can be a separate and dedicated unit. Suitably, the method according to the invention is configured to receive at the input a digital image of a Raman spectrum and also the contribution of the diffused light.

In particular, the method according to the invention can be used to process a digital image, which includes a Raman spectrum and also the contribution of the diffused light, and which was acquired with the device 12 as described above or with another device of acquisition of the Raman spectrum provided with a two-dimensional type detector and/or comprising an image sensor to form said digital image.

Suitably, the spectrum obtained with the device 12 of the present invention or with other devices in general, provided that they are equipped with a two-dimensional type detector and/or comprising an image sensor, spread along the detector's x-axis (spectral axis), while along the y axis (spatial axis) the image of the long side of the source is formed, cf. figs. 2a, 4-6.

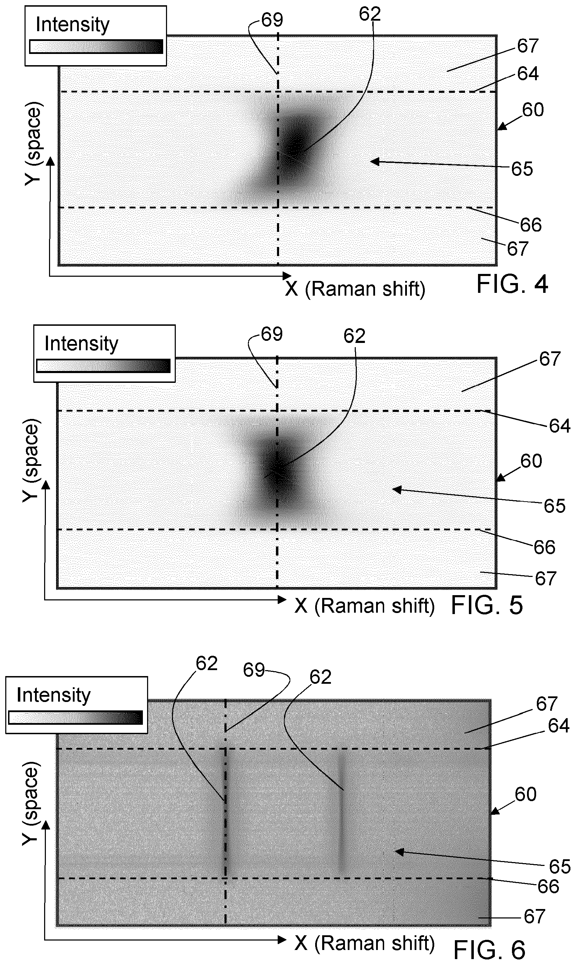

The digital image 60 obtained by the detector of the Raman spectrum acquisition device comprises one or more Raman spectral bands 62, which may be slightly curved due to the aberrations of the optics of the imaging group 28, and in particular, for example in the device 12 described above, due to the residual aberration of the first lens 48 and the second lens 52 which have a large aperture. Conveniently, as shown in figures 4-6, in the digital image 60 detected by the detector 32, the spectral bands 62 do not occupy all the space/development along the y axis but are focused by the optics of the imaging group 28 inside a central band 65 substantially horizontal (and therefore substantially parallel to the spectral axis X), which preferably can be substantially centered with respect to the detector 32.

In particular, in image 60, outside said central band 65 containing the Raman spectral bands 62 and - more in detail - in the two outer bands 67, substantially there may be no contributions to the measured intensity due to the Raman spectral bands 62, but only contributions due to the diffused light that is not eliminated by the optical elements of the Raman spectrum acquisition device and which substantially presents all the spectral components, but not necessarily in the same proportion and/or intensity.

Conveniently, the band 63 (see fig. 2a, 2b, 2c) due to the radiation at the wavelength of the laser $\lambda L$ coming from the transmission residue through the laser light filter 40, can also be present in the digital image 60 shown in Figs. 1 and 3.

Conveniently, as mentioned, a method is disclosed for processing a digital image 60 - comprising at least one Raman spectrum 62, and also the contribution of diffused light - to obtain an optimized Raman spectrum, and in particular filtered by the contribution of diffused light.

Suitably, the method can be implemented in a processing unit comprising an electronic processor.

Advantageously, said method allows to enhance/identify the contributions of the Raman spectrum of a digital image 60 created by/on a two-dimensional detector, and this in order to then be able to carry out quantitative assessments on the composition of the gas sample analyzed.

In particular, the method for processing the image 60 comprises the following steps:

-    making available a digital image 60, as detected by a two-dimensional detector of a Raman spectrum acquisition device, and comprising at least a Raman spectral band 62 as detected by the detector, and also comprising the contribution/noise defined by the diffused light that is inevitably collected during the acquisition of said at least one Raman 62 spectral band,
-    straightening and/or horizontal translation of said at least one band spectral 62 and, in particular, of that present inside the horizontal band 65 of the image 60 (i.e. of the "ideal" horizontal band occupied only by the spectral bands 62); in particular, said at least one spectral band 62 can be curved due to the optical aberrations of the acquisition device, for example because of the aberrations of the lenses 48 and 52,
-    removal of the contribution of the diffused light present inside the same image 60 and, in particular, due to the light that is diffused by the different components of the Raman spectrum acquisition device; in particular, the intensity value of the light diffused in the outer bands 67 without said at least one Raman spectral band 62 is calculated and it is subtracted from the pixel values of the spectral band 62, thus obtaining an optimized Raman spectral band 62 without contribution of the diffused light,
-    integration/sum of the intensity values of all the pixels of said at least one corresponding spectral band 62, previously rectified, to obtain in this way a value and/or data vector representative of the intensity of said at least one Raman spectral band.

In particular, the color - for example in grayscale - of each pixel of the digital image 60 is representative of the luminous intensity detected by a two-dimensional detector of a Raman spectrum acquisition device.

Conveniently, in the method the integration/sum of the pixel intensity values is preferably carried out subsequently with respect to the removal of the contribution of the diffused light, however - alternatively - it could be carried out previously.

Preferably, in a possible embodiment, the horizontal straightening and/or translation of said at least one Raman spectral band 62 is always carried out by default, that is, without having first calculated the possible curvature of the corresponding band.

Preferably, in a possible embodiment, the horizontal straightening and/or translation of said at least one Raman spectral band 62 provides for the horizontal translation (shift) of each horizontal row of pixels of the digital image 60 to be processed by a predefined number of pixels, which has been suitably and previously calculated and defined on a calibration image previously acquired with a known gas (for example nitrogen) and using the same optical acquisition device that generated the digital image 60 to be processed. Advantageously, the predefined number of pixels for the translation (shift) for each row of the digital image 60 to be processed is extracted from a lookup table - or other suitable organized data structure - generated on a calibration image previously acquired with a known gas ( for example nitrogen) and using the same optical acquisition device that generated the digital image 60 to be processed.

Preferably, in a possible embodiment, the horizontal straightening and/or translation of the Raman spectral bands 62 takes place by means of an algorithm. Preferably, this algorithm can be configured to:

-    identify for each horizontal row of a calibration image (which was previously acquired with a known gas and using the same optical acquisition device that generated the digital image 60 to be processed) the pixel of said row having the maximum intensity value; in particular, for each horizontal row of pixels along the Y axis, the $X_{max}$ coordinate of the pixel is identified for which the intensity (i.e. the pixel value) is maximum, i.e. $I_{max}$; preferably, this can be carried out by means of known data search and/or interpolation procedures,
-    generating a lookup table - or other suitable organized data structure - in which each horizontal row of pixels Y is associated with the corresponding $X_{max}$ coordinate - as above identified - of the pixel having maximum intensity or another value calculated starting from said coordinate $X_{max}$,
-    horizontally translating in the digital image 60 to be processed, for each horizontal row of pixels Y, a part or the entire horizontal row of pixels on the basis a corresponding value extracted from the lookup table/data structure; in particular, for each horizontal row of pixels Y of the digital image 60, the value associated/derived from the coordinate Xmax is used for translation, which in the lookup table/data structure is associated with the same corresponding horizontal row of pixels Y being processed.

Conveniently, therefore, each row of the image 60 is moved by a predefined number of pixels and/or centered at a predefined position, thus causing the straightening of the spectral band 62.

Advantageously, the removal of the contribution of the diffused light can comprise the following steps:

- calculation of the contribution of the diffused light, in particular in the outer bands 67 without the Raman spectral band 62 and therefore outside the central band 65 in which one or more Raman spectral bands 62 are focused; preferably, for example, the calculation of the contribution of the diffused light can be carried out by averaging the pixel intensity values of one or both (i.e. above and/or below) the outer bands 67 and which are vertically aligned with a column 69 of pixel that crosses the spectral band 62, or the average of the intensity values of the pixels can be made always considering the pixels of one or both (i.e. above and/or below) the outer bands 67 and affecting an area (i.e. the column 69 and the columns adjacent to the latter) vertically aligned to the Raman 62 spectral band,
- the contribution of the diffused light thus calculated is subtracted from the pixel intensity values of the Raman spectral band 62, and preferably from the pixels of at least one or each column 69 which makes up the Raman spectral band 62, thus obtaining a Raman spectral band 62 or a column 69 without the contribution of diffused light.

Advantageously, in the digital image 60 comprising the spectral bands 62, the portions above the line 66 and below the line 64 contain information relating to the spurious light always present in a Raman spectrum acquisition device and coming from different sources such as for example the laser light which is not completely blocked by the abatement filter (for example by the filter 40 of the device 12), or the fluorescence light due to the interaction of the laser beam with the focusing lens 24. Advantageously, therefore, by subtracting from the spectrum this contribution, a more truthful Raman spectrum of gas is obtained.

Suitably, the integration/addition is carried out for a group of pixels selected on the basis of the intensity of the signal associated with them and, preferably, belonging to the same column 69 (i.e. vertically aligned) which crosses/composes the spectral band 62. Preferably , the pixels having an intensity higher than a predefined value are selected, which can advantageously be defined and/or calculated on the basis of the minimum value of the spectral band 62 from which the contribution of the diffused light has been subtracted, and/or with respect to the maximum value of the band 62 suitably calculated on a corresponding column 69 and/or on the adjacent columns.

Advantageously, the integration/sum is carried out for a group of pixels, vertically aligned, and comprised between a lower horizontal line 64 and a upper horizontal line 66 so as to substantially include between the two lines 64, 66 the portion containing the useful signal and more representative of the Raman band 62. Preferably, the lines 64 and 66 are defined so as to enclose only the pixels of the same column 69 (i.e. vertically aligned), or of several closely spaced columns, which have intensity values not inferior to for example about 1-5% of the maximum pixel value of the same column.

Advantageously, moreover, in the step of integrating/adding the intensities of the pixels of the spectral band 62, regions of the digital image 60 in which diffused light components are still present, which can be suitably identified since they deviate from the value of background of a predefined intensity value, or because they are located in specific regions/areas of the image themselves, or because they have an intensity equal to or less than a predefined value calculated with respect to the maximum value of the corresponding spectral band 62.

Advantageously, in an embodiment, the method envisages:

- integrating the intensity signal of all the pixels of each spectral band 62, previously straightened, in the band 65 defined between a lower horizontal line 64 and an upper horizontal line 66 so as to include, between the two lines 64 66, the portion containing the useful signal of the corresponding Raman spectral band 62, or thus keeping a data vector representative of the intensity of the Raman spectrum,
- subtracting from the spectrum obtained in the previous point the contribution of the diffused light which is suitably calculated on the portions of the image, above the upper line 66 and below the lower line 64, and preferably substantially vertically aligned with the corresponding spectral band 62, thus obtaining an optimized Raman spectrum 70, and in particular a real Raman spectrum which is devoid of diffused light.

Advantageously, in a possible embodiment, the method can also comprise an initial phase in which - once the image to be processed is made available - the dark signal is removed. Suitably, this operation can be carried out by recording an image under laser off conditions with the same operating parameters as the measurement image and the pixel-by-pixel value of the former is subtracted from the latter. Advantageously, this operation allows to eliminate the contribution of the thermal signal due to free charges which are deposited on the pixels of the sensor.

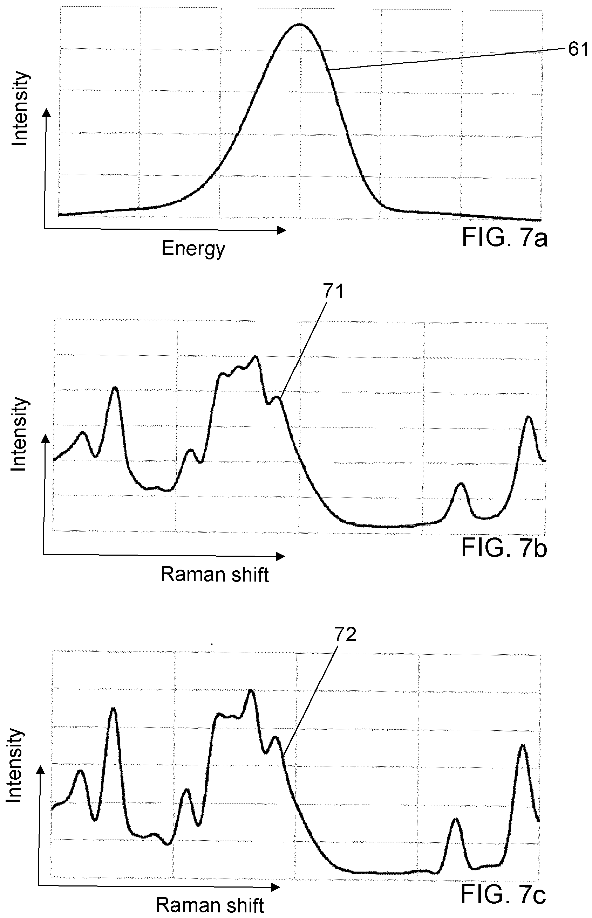

Advantageously, the method can also comprise a phase of deconvolution of the spectrum in which the acquired Raman spectrum (see fig. 7b) - and preferably after being processed with the other aforementioned steps of the method - is further processed in order to remove the dependence on the form of the exciting function, that is, on the form of the laser radiation used for the acquisition of the Raman spectrum. Advantageously, for example, in the case of the device 12 of figures 1 and 3, this allows to remove the dependence on the laser radiation emitted by the source 16 and suitably detected by the meter 58.

Advantageously, particularly in the case of diode lasers, the method comprises a phase in which the measured Raman spectrum 71 is deconvoluted (see fig. 7b), which inevitably inherits the contribution of the pump/excitation laser radiation, so as to obtain a Raman spectrum 72 (see fig. 7c) which it is independent of the spectral profile of the pump laser (see fig. 7a). For this purpose, the acquired/measured Raman spectrum 71 (see fig. 7b) is deconvolved with the spectrum 61 of the excitation/pump laser (see fig. 7a) in the same operating conditions, which therefore represents the impulse response function in the deconvolution operation. In particular, this deconvolution operation is performed in an optimal way, minimizing the degradation of the relationship between signal and spectrum noise, using the precise shape of the band 63 as an aberrant function (see fig. 2a-2c) and corresponding to the spectrum 61 of fig. 7a.

Suitably, this band can be recorded with great precision both because it is intrinsically very intense and because it can also be recorded independently of the Raman spectrum with optimal exposure times.

Suitably, the deconvoluted Raman spectrum 72 (see fig. 7c) relating to the gas or gas mixture to be analyzed, is therefore compared with one or more reference Raman spectra (preferably also deconvoluted as above in order to eliminate the contribution of the pump/excitation laser radiation) and related to known gases or gas mixtures, to thus identify the corresponding gas or gas mixture.

The method is particularly advantageous in that it:

- allows to compensate the spatial aberrations created by the optics of the Raman spectrum acquisition device, preferably the Raman spectrum of a gas,
- allows to obtain a more real and truthful Raman spectrum, without of the diffused light contribution,
- the correction of the diffused light contribution is carried out using data present in the same image that contains the Raman spectrum, thus avoiding the use of data relating to the diffused light of images taken before or after the acquisition of the Raman spectrum; in essence, the method according to the invention, considering the diffused light and the Raman spectrum present in the same/single image, is particularly robust and is not affected by the possible variation in the contribution of the light diffused over time.

**Claims**

1. An optical device (12) for analyzing a gas composition comprising:

    - an excitation radiation emitter (14) comprising a multimode laser source (16) configured to emit a laser beam;
- an analysis cell (18) suitable for containing a gas, said analysis cell (18) having an inlet duct (20), through which a gas can flow to the inside of said analysis cell (18), and an outlet duct (22), through which the gas can flow out from the analysis cell (18); said analysis cell (18) comprising a focusing lens (24), suitable for focusing said laser beam in a focal area (26) inside the analysis cell (18), said focal area (26) acting as a source for Raman radiation collected in a direction perpendicular to the direction of the beam, said analysis cell (18) comprising a window (27) and/or lens suitable to be crossed by said Raman radiation,
- an imaging group (28) for the Raman source and a spectrograph (30); said imaging group being suitable for forming an image of the Raman source as input to said spectrograph (30); and
- a detector (32) suitable for collecting the image of the spectrum formed by the spectrograph (30),

and **characterized in that**:

     - the seal for the gas inside said analysis cell (18) is obtained, in correspondence with the entry of the laser beam into said analysis cell (18), by means of said focusing lens (24),
     - said analysis cell (18) comprises a laser beam stopper (36) suitable for totally absorbing the laser beam without diffusing spurious radiation, and
     - the focusing lens (24) being provided on a wall of the cell (18) which faces a wall of the cell in which the beam stopper is mounted.

2. Device (12) according to claim 1, **characterized in that** it comprises a control and/or processing unit (34) suitable for applying a constrained deconvolution algorithm for improving the spectral resolution.

3. Device (12) according to one or more of the preceding claims, **characterized in that** said multimode laser source (16) is a solid state laser or a diode laser.

4. Device (12) according to claim 1, **characterized in that** said laser beam stopper (36) comprises a tubular section, preferably curved or shaped so as to define a spiral path.

5. Device (12) according to claim 1, **characterized in that** said laser beam stopper (36) comprises a tubular section which also defines said inlet duct (20), through which a gas can flow to the inside of said analysis cell (18), and/or said outlet duct (22), through which the gas can flow from the analysis cell (18).

6. Device (12) according to one or more of the preceding claims, **characterized in that** only a beam separator (56) is present between said exciting light emitter (14) and said focusing lens (24).

7. Device (12) according to or more than the preceding claims, **characterized in that** said analysis cell (18) has no optical windows crossed by the laser beam emitted by said multimode laser source (16).

8. Device (12) according to one or more of the preceding claims, **characterized in that** said imaging group (28) comprises a collimation lens (38), a laser light filter (40), and a focusing lens (42) ; wherein the collimation lens (38) has its focus coinciding with the Raman source (26) and the focusing lens (42) is suitable for forming the image of the Raman source (26) on the spectrograph (30) input plane; said imaging group (28) forming an image of said Raman source (26) with reduction so as to operate said spectrograph in slitless mode.

9. Device (12) according to one or more of the preceding claims, **characterized in that** said spectrograph comprises an entrance plane (44) which contains an entrance slit (46), a first lens (48) which has its focus at the entrance plane (44), a diffraction grating (50), and a second lens (52) suitable for converging the diffracted rays coming from the diffraction grating (50) on a plane (54).

10. Device (12) according to the preceding claim, **characterized in that** the focal distance of the first lens (48) is greater than the focal distance of the second lens (52), preferably it is approximately double.

11. Device (12) according to any one of the preceding claims, **characterized in that** said detector (32) is an uncooled CMOS.

12. Device (12) according to one or more of the preceding claims, **characterized in that** it comprises a beam separator (56) suitable for picking up a portion of the laser beam leaving the said multimode laser source (16), and for sending it to a meter (58), said meter being connected to said control and/or processing unit (34).

**Patentansprüche**

1. Optische Vorrichtung (12) zum Analysieren einer Gaszusammensetzung, umfassend:

- einen Anregungsstrahlungsemitter (14), der eine Multimode-Laserquelle (16) umfasst, die so konfiguriert ist, dass sie einen Laserstrahl emittiert;
- eine Analysezelle (18), die geeignet ist, ein Gas zu enthalten, wobei die Analysezelle (18) einen Einlasskanal (20), durch den ein Gas in das Innere der Analysezelle (18) einströmen kann, und einen Auslasskanal (22), durch den das Gas aus der Analysezelle (18) ausströmen kann, aufweist, wobei die Analysezelle (18) eine Fokussierlinse (24) umfasst, die geeignet ist, den Laserstrahl in einem Brennbereich (26) im Innern der Analysezelle (18) zu fokussieren, wobei der Brennbereich (26) als eine Quelle für Raman-Strahlung wirkt, die in einer Richtung senkrecht zur Richtung des Strahls gesammelt wird, wobei die Analysezelle (18) ein Fenster (27) und/oder eine Linse umfasst, die geeignet ist, von der Raman-Strahlung durchquert zu werden,
- eine Abbildungsgruppe (28) für die Raman-Quelle und einen Spektrographen (30); wobei die Abbildungsgruppe geeignet ist, ein Bild der Raman-Quelle als Eingabe für den Spektrographen (30) zu erzeugen; und
- einen Detektor (32), der geeignet ist, das vom Spektrographen (30) erzeugte Bild des Spektrums aufzunehmen,

und **dadurch gekennzeichnet, dass**:

- die Abdichtung des Gases im Inneren der Analysezelle (18) in Übereinstimmung mit dem Eintritt des Laserstrahls in die Analysezelle (18) mittels der Fokussierlinse (24) erreicht wird,
- die Analysezelle (18) einen Laserstrahlstopper (36) umfasst, der geeignet ist, den Laserstrahl vollständig zu absorbieren, ohne Störstrahlung zu streuen, und
- wobei die Fokussierlinse (24) an einer Wand der Zelle (18) vorgesehen ist, die einer Wand der Zelle zugewandt ist, in der der Strahlstopper montiert ist.

2. Vorrichtung (12) nach Anspruch 1, **dadurch gekennzeichnet, dass** sie eine Steuer- und/oder Verarbeitungseinheit (34) umfasst, die geeignet ist, einen eingeschränkten Dekonvolutionsalgorithmus zur Verbesserung der Spektralauflösung anzuwenden.

3. Vorrichtung (12) nach einem oder mehreren der vorstehenden Ansprüche, **dadurch gekennzeichnet, dass** die Multimode-Laserquelle (16) ein Festkörperlaser oder ein Diodenlaser ist.

4. Vorrichtung (12) nach Anspruch 1, **dadurch gekennzeichnet, dass** der Laserstrahlstopper (36) einen röhrenförmigen Abschnitt aufweist, der vorzugsweise gekrümmt oder so geformt ist, dass er einen spiralförmigen Weg definiert.

5. Vorrichtung (12) nach Anspruch 1, **dadurch gekennzeichnet, dass** der Laserstrahlstopper (36) einen röhrenförmigen Abschnitt umfasst, der auch den Einlasskanal (20), durch den ein Gas in das Innere der Analysezelle (18) einströmen kann, und/oder den Auslasskanal (22), durch den das Gas aus der Analysezelle (18) ausströmen kann, definiert.

6. Vorrichtung (12) nach einem oder mehreren der vorstehenden Ansprüche, **dadurch gekennzeichnet, dass** zwischen dem Anregungslichtemitter (14) und der Fokussierlinse (24) nur ein Strahlteiler (56) vorhanden ist.

7. Vorrichtung (12) nach einem oder mehreren der vorstehenden Ansprüche, **dadurch gekennzeichnet, dass** die Analysezelle (18) keine optischen Fenster aufweist, die von dem von der Multimode-Laserquelle (16) emittierten Laserstrahl durchquert werden.

8. Vorrichtung (12) nach einem oder mehreren der vorstehenden Ansprüche, **dadurch gekennzeichnet, dass** die Abbildungsgruppe (28) eine Kollimationslinse (38), einen Laserlichtfilter (40) und eine Fokussierlinse (42) umfasst; wobei der Brennpunkt der Kollimationslinse (38) mit der Raman-Quelle (26) zusammenfällt und die Fokussierlinse (42) geeignet ist, das Bild der Raman-Quelle (26) auf der Eingangsebene des Spektrographen (30) zu erzeugen; wobei die Abbildungsgruppe (28) ein Bild der Raman-Quelle (26) mit einer Verkleinerung erzeugt, um den Spektrographen im spaltlosen Modus zu betreiben.

9. Vorrichtung (12) nach einem oder mehreren der vorstehenden Ansprüche, **dadurch gekennzeichnet, dass** der Spektrograph eine Eingangsebene (44), die einen Eingangsspalt (46) enthält, eine erste Linse (48), die ihren Brennpunkt an der Eingangsebene (44) aufweist, ein Beugungsgitter (50) und eine zweite Linse (52) umfasst, die geeignet ist, die von dem Beugungsgitter (50) kommenden gebeugten Strahlen auf einer Ebene (54) zu konvergieren.

10. Vorrichtung (12) nach dem vorstehenden Anspruch, **dadurch gekennzeichnet, dass** die Brennweite der ersten Linse (48) größer ist als die Brennweite der zweiten Linse (52), vorzugsweise etwa doppelt so groß ist.

11. Vorrichtung (12) nach einem der vorstehenden Ansprüche, **dadurch gekennzeichnet, dass** der Detektor (32) ein ungekühlter CMOS ist.

12. Vorrichtung (12) nach einem oder mehreren der vorstehenden Ansprüche, **dadurch gekennzeichnet,**

**dass** sie einen Strahlseparator (56) umfasst, der geeignet ist, einen Teil des Laserstrahls, der die Multimode-Laserquelle (16) verlässt, aufzufangen und zu einem Messgerät (58) zu leiten, wobei das Messgerät mit der Steuer- und/oder Verarbeitungseinheit (34) verbunden ist.

## Revendications

1. Dispositif optique (12) pour l'analyse d'une composition gazeuse comprenant :

   - un émetteur de rayonnement d'excitation (14) comprenant une source laser multimode (16) configurée pour émettre un faisceau laser ;
   - une cellule d'analyse (18) apte à contenir un gaz, ladite cellule d'analyse (18) ayant un conduit d'entrée (20), par lequel un gaz peut s'écouler à l'intérieur de ladite cellule d'analyse (18), et un conduit de sortie (22), par lequel le gaz peut s'écouler hors de la cellule d'analyse (18) ; ladite cellule d'analyse (18) comprenant une lentille de focalisation (24), apte à focaliser ledit faisceau laser dans une zone focale (26) à l'intérieur de la cellule d'analyse (18), ladite zone focale (26) agissant comme une source de rayonnement Raman collecté dans une direction perpendiculaire à la direction du faisceau, ladite cellule d'analyse (18) comprenant une fenêtre (27) et/ou une lentille apte à être traversée par ledit rayonnement Raman,
   - un groupe d'imagerie (28) pour la source Raman et un spectrographe (30) ; ledit groupe d'imagerie est apte à former une image de la source Raman en tant qu'entrée dudit spectrographe (30) ; et
   - un détecteur (32) apte à recueillir l'image du spectre formée par le spectrographe (30),

   et **caractérisé en ce que** :

   - l'étanchéité du gaz à l'intérieur de ladite cellule d'analyse (18) est obtenue, en correspondance de l'entrée du faisceau laser dans ladite cellule d'analyse (18), au moyen de ladite lentille de focalisation (24),
   - ladite cellule d'analyse (18) comprend un obturateur de faisceau laser (36) apte à absorber totalement le faisceau laser sans diffusion de rayonnement parasite, et
   - la lentille de focalisation (24) est placée sur une paroi de la cellule (18) qui fait face à une paroi de la cellule dans laquelle l'obturateur de faisceau est monté.

2. Dispositif (12) selon la revendication 1, **caractérisé en ce qu'**il comprend une unité de commande et/ou de traitement (34) apte à appliquer un algorithme de déconvolution contraint pour améliorer la résolution spectrale.

3. Dispositif (12) selon une ou plusieurs des revendications précédentes, **caractérisé en ce que** ladite source laser multimode (16) est un laser à l'état solide ou un laser à diode.

4. Dispositif (12) selon la revendication 1, **caractérisé en ce que** ledit obturateur de faisceau laser (36) comprend une section tubulaire, de préférence incurvée ou façonnée de manière à définir une trajectoire en spirale.

5. Dispositif (12) selon la revendication 1, **caractérisé en ce que** ledit obturateur de faisceau laser (36) comprend une section tubulaire qui définit également ledit conduit d'entrée (20), par lequel un gaz peut s'écouler vers l'intérieur de ladite cellule d'analyse (18), et/ou ledit conduit de sortie (22), par lequel le gaz peut s'écouler à partir de la cellule d'analyse (18).

6. Dispositif (12) selon une ou plusieurs des revendications précédentes, **caractérisé en ce que** seul un séparateur de faisceau (56) est présent entre ledit émetteur de lumière d'excitation (14) et ladite lentille de focalisation (24).

7. Dispositif (12) selon une ou plusieurs des revendications précédentes, **caractérisé en ce que** ladite cellule d'analyse (18) ne présente pas de fenêtres optiques traversées par le faisceau laser émis par ladite source laser multimode (16).

8. Dispositif (12) selon une ou plusieurs des revendications précédentes, **caractérisé en ce que** ledit groupe d'imagerie (28) comprend une lentille de collimation (38), un filtre de lumière laser (40) et une lentille de focalisation (42) ; dans lequel la lentille de collimation (38) a son foyer coïncidant avec la source Raman (26) et la lentille de focalisation (42) est apte à former l'image de la source Raman (26) sur le plan d'entrée du spectrographe (30) ; ledit groupe d'imagerie (28) formant une image de ladite source Raman (26) avec réduction de manière à faire fonctionner ledit spectrographe en mode sans fente.

9. Dispositif (12) selon une ou plusieurs des revendications précédentes, **caractérisé en ce que** ledit spectrographe comprend un plan d'entrée (44) qui contient une fente d'entrée (46), une première lentille (48) qui a son foyer au niveau du plan d'entrée (44), un réseau de diffraction (50), et une seconde lentille (52) apte à faire converger les rayons diffractés provenant du réseau de diffraction (50) sur un plan (54).

10. Dispositif (12) selon la revendication précédente, **caractérisé en ce que** la distance focale de la première lentille (48) est supérieure à la distance focale de la seconde lentille (52), de préférence elle est approximativement le double.

11. Dispositif (12) selon l'une quelconque des revendications précédentes, **caractérisé en ce que** ledit détecteur (32) est un CMOS non refroidi.

12. Dispositif (12) selon une ou plusieurs des revendications précédentes, **caractérisé en ce qu'**il comprend un séparateur de faisceau (56) apte à capter une partie du faisceau laser sortant de ladite source laser multimode (16) et à l'envoyer vers un compteur (58), ledit compteur étant relié à ladite unité de commande et/ou de traitement (34).

FIG. 1

FIG. 2a        FIG. 2b        FIG. 2c

FIG. 3

FIG. 4

FIG. 5

FIG. 6

FIG. 7a

FIG. 7b

FIG. 7c

**EP 3 748 339 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6072577 A
- US 6100975 A
- US 5786893 A
- RU 2613200
- RU 2672187
- US 20060176478 A
- US 4676639 A